# EUROPEAN PATENT APPLICATION

(11) **EP 4 343 412 A1**
(43) Date of publication of application: **27.03.2024**
(21) Application number: 22197246.6
(22) Date of filing: 22.09.2022
(51) Int. Cl.: G02C 1/02

(54) **FASTENING ASSEMBLIES FOR SPECTACLES AND SPECTACLE**

(71) Applicant: Haffmans & Neumeister GmbH, 10827 Berlin (DE)
(72) Inventor: Haffmans, Philipp, 10827 Berlin (DE)
(74) Representative: Schulz Junghans Patentanwälte PartGmbB

(57) **Abstract**

The present invention relates to a fastening element, in particular for fastening components of a spectacle to each other, wherein the fastening element comprises a screw portion with a thread extending along the screw portion, characterized in that the thread is interrupted at least once in a circumferential direction around the screw portion.

The invention also relates to a fastening assembly, a first spectacle portion, a second spectacle portion as well as a spectacle.

## Description

The present invention relates to a fastening element, particularly for fastening components of a spectacle to each other, as well as a fastening assembly. Further, the present invention relates to a first spectacle portion, a second spectacle portion and a spectacle.

### Background

Spectacles constitute a ubiquitous item in the worldwide population with an estimated worldwide market volume of around 107 billion dollars. However, little effort has been made to provide a user with a spectacle, wherein the components comprised in said spectacle are of high durability, stability and provide little to none clearance between the components to be fastened.

Based on this, it is subject of the present invention to provide a fastening element, a fastening assembly, a first spectacle portion, a second spectacle portion and a spectacle, with high durability and great stability with little clearance, particularly when assembled, without compromising aesthetics.

This task is solved by a fastening element, particularly for fastening components of a spectacle, according to the features of claim 1 as well as a fastening assembly according to the features of claim 9. Furthermore, the task is solved by a first spectacle portion according to the features of claim 13, a second spectacle portion according to the features of claim 14 and a spectacle according to the features of claim 15.

### Summary of the invention

A first aspect of the invention relates to a fastening element, particularly for fastening components of a spectacle to each other, wherein the fastening element comprises a screw portion with a thread extending along the screw portion, characterized in that the thread is interrupted at least once in a circumferential direction around the screw portion.

A second aspect of the invention relates to a fastening assembly, particularly for fastening components of a spectacle, wherein the fastening assembly comprises:
- a fastening element according to the first aspect of the invention, and
- a nut element,
wherein the nut element comprises an internal thread corresponding to the thread of the fastening element, such that the nut element can be screwed onto the screw portion of the fastening element in a frictionally engaged connection.
In one embodiment, the internal thread of the nut element is shaped cylindrically.
In certain embodiments the fastening assembly may further comprise a disc element with a central opening corresponding to the screw portion, such that the disc element is arrangeable around the screw portion of the fastening element.

A third aspect of the invention relates to a spectacle portion, comprising
- a fastening assembly according to the second aspect of the invention;
- at least a section of a temple, and
- a spectacle lens, particularly a frameless spectacle lens,
wherein the temple comprises a first opening corresponding to the screw portion of the fastening element and a second opening corresponding to the locking portion, and
wherein the spectacle lens comprises in a first edge portion of the lens a first opening corresponding to the screw portion of the fastening element and a second opening or a blind hole corresponding to the locking portion of the fastening element, such that the screw portion can be arranged through the first openings of the temple and the spectacle lens and that the locking portion can be arranged through the second opening of the temple and at least into, particularly through the second opening or the blind hole of the spectacle lens, whereby the fastening assembly is configured to fasten the spectacle lens to the temple by screwing the nut onto the screw element protruding through the first openings of the spectacle lens and the temple with the locking portion locked in the second opening of the temple and in the second opening or in the blind hole of the spectacle lens.

A fourth aspect of the invention relates to a second spectacle portion comprising
- a fastening assembly according to the second aspect of the invention;
- at least a section of a bridge, and
- a spectacle lens, particularly a frameless spectacle lens,
wherein the bridge comprises a first opening corresponding to the screw portion of the fastening element and a second opening corresponding to the locking portion, and
wherein the spectacle lens comprises in a second edge portion of the lens opposite to said first edge portion a first opening corresponding to the screw portion of the fastening element and a second opening or a blind hole corresponding to the locking portion of the fastening element, such that the screw portion can be arranged through the first openings of the bridge and the spectacle lens and that the locking portion can be arranged through the second opening of the bridge and at least into, particularly through the second opening or the blind hole of the spectacle lens, whereby the fastening assembly is configured to fasten the spectacle lens to the bridge by screwing the nut onto the screw element protruding through the first openings of the spectacle lens and the bridge with the locking portion locked in the second opening of the bridge and in the second opening or in the blind hole of the spectacle lens.

A fifth aspect of the invention relates to a spectacle, comprising
- two temples,
- two spectacle lenses,
- a bridge and
- four fastening assemblies according to the second aspect of the invention,
wherein each spectacle lens is fastened to a corresponding temple via a fastening assembly, forming two first spectacle portions according to the third aspect of the invention and wherein each spectacle lens is additionally fastened via a fastening assembly to a common bridge connecting the spectacle lenses, forming two second spectacle portions according to the fourth aspect of the invention.

Advantageous embodiments of the invention are given in the corresponding subclaims and are stated below accompanied by the detailed description of the invention.

### Detailed description of the invention

A first aspect of the invention relates to a fastening element, particularly for fastening components of a spectacle to each other, wherein the fastening element comprises a screw portion with a thread extending along the screw portion, characterized in that the thread is interrupted at least once in a circumferential direction around the screw portion.

Particularly, in case of spectacles, the components to be fastened to each other by the fastening element may be at least two of the following: at least a section of a temple, a spectacle lens, a bridge.

In an embodiment of the first aspect of the invention, the thread is interrupted by at least one surface extending between two angular edges delimiting an interruption of the thread.

In an embodiment, said surface is a planar surface.

In certain embodiments, the screw portion of the fastening element comprises one interruption delimited by two angular edges of the thread.

In an embodiment, the thread comprises exactly two interruptions with two planar surfaces arranged on two opposite sides of the screw portion.

In certain embodiments, the screw portion of the fastening element comprises two interruptions delimited by two angular edges of the thread respectively.

In certain embodiments, the thread comprises an essentially polygonal cross-section. In other words, in a cross-sectional view, the thread may comprise essentially straight, i.e. uncurved outer surfaces extending between the edges of the polygon. As such, the thread of the screw portion is distinct from conventional screws that comprise a closed circular cross-section.

In certain embodiments the thread comprises an essentially quadrangular cross-section.

In certain embodiments, the thread comprises an essentially rectangular or squared cross-section.

In preferred embodiments, the corners of the polygon or the quadrangle are rounded off. In case of rounded off corners, the cross-section of the thread may still be considered as being 'essentially' polygonal in the context of the present invention.

In an alternative embodiment of the invention, the thread comprises more than two interruptions, wherein each interruption is delimited by two angular edges respectively. Imaginable, e.g., are multiple interruptions, wherein the number of interruptions is denoted by a real value integer, wherein the real value integer can be selected from 3, 4, 5, or more, wherein each of the interruptions is delimited by two angular edges and each interruption spans a surface, preferably a planar surface and wherein between two angular edges that do not delimit the same interruption at least part of a thread is arranged thereto.

In certain embodiments, the screw portion of the fastening element comprises three interruptions, wherein each interruption is delimited by two angular edges of the thread respectively, thereby forming an essentially triangular cross-section with rounded corners.

In certain embodiments, the fastening element further comprises a locking portion extending parallel to the screw portion, wherein the locking portion and the screw portion are connected such that the fastening element at least in sections forms a U-shape.

In certain embodiments of the first aspect of the invention, the locking portion of the fastening element is not separable from the fastening element.

In certain embodiments, the fastening element can consist only of the screw portion.

A second aspect of the invention relates to a fastening assembly, particularly for fastening components of a spectacle, wherein the fastening assembly comprises:
- a fastening element according to the first aspect of the invention, and
- a nut element,
- wherein the nut element comprises an internal thread corresponding to the thread of the fastening element, such that the nut element can be screwed onto the screw portion of the fastening element in a frictionally engaged connection.

In an embodiment, the fastening assembly further comprises a disc element with a central opening corresponding to the screw portion, such that the disc element is arrangeable around the screw portion of the fastening element.

In certain embodiments, the disc element consists or comprises of a different material than the screw portion, fastening element and/or nut element.

In certain embodiments, the disc element is made of a rubber material, thereby reducing pressure exerted by the nut element on a spectacle lens.

In certain embodiments, the disc element is made of a wood material.

In certain embodiments, the disc element is made of a metal material. In certain embodiments, the disc element is made of a metal or alloy material.

In certain embodiments, the disc element is made of the same material as the nut element.

In certain embodiments, the fastening element comprises a screw portion, wherein the screw portion comprises a thread, wherein the thread at least partially extends circumferentially around the screw portion, and wherein the fastening element comprises a locking portion connected to the screw portion, thereby forming U-shape. Imaginable are also realizations of the fastening element, wherein the fastening element comprises more than one locking portion, e.g. two, thereby forming essentially a W-shape.

In an embodiment, the internal thread of the nut element is shaped cylindrically.

In certain embodiments, the locking portion of the fastening element is shaped as a rod having a triangular cross-section.

In certain embodiments, the locking portion of the fastening element is shaped as a rod having a rectangular cross-section.

In certain embodiments, the locking portion of the fastening element is shaped as a rod having a rectangular cross-section.

In certain embodiments, the locking portion of the fastening element is shaped as a rod having a polygonal cross-section.

In certain embodiments, the locking portion of the fastening element is shaped as a cone.

In an embodiment, the locking portion of the fastening element comprises a thread, such that both the screw portion and the locking portion are equipped with a thread. In this embodiment, the fastening assembly preferably comprises a second nut element with an internal thread corresponding to the thread of the locking portion, such that the second nut element can be screwed onto the thread of the locking element in a frictionally engaged connection.

In an embodiment of the fastening assembly according to the invention, the thread of the fastening element comprises a higher stiffness than the internal thread of the nut element. As such, the softer nut element may engage with the harder fastening element in a frictionally engaged manner. Hence, the fastening element forms a sustainable component, whereby the nut element can be replaced on demand, particularly in case of wear.

In certain embodiments, one of thread of the fastening element and internal thread of the nut element comprises a greater stiffness than the other.

In certain embodiments, the fastening element of the fastening assembly comprises a different material than the nut element of the fastening assembly, preferably a material comprising a higher stiffness.

In certain embodiments, the fastening element comprises or consists of at least one metal or alloy. For example, the fastening element comprises at least one of or consists of one of the following: titanium, steel, iron, aluminum, brass. Particularly, the fastening element comprises or consists of flat steel.

Particularly, the fastening element comprises stainless steel, for example EN ISO 4310 and/or EN ISO 4301. In an embodiment, the thread of the screw portion of the fastening element extends between 1 mm and 100 mm along a longitudinal extension direction.

In an embodiment, the thread of the screw portion of the fastening element comprises a lateral diameter between 0.5 mm to 20 mm extending perpendicular to said longitudinal extension direction, wherein the lateral diameter is delimited by the thread on both sides.

In an embodiment, the thread of the screw portion of the fastening element comprises a thickness between 0.1 mm to 5 mm. For one interruption, the thickness defines an extent of the thread between an interruption of the thread and an opposite side of the thread arranged opposite of the interruption. For two or more interruptions, the thickness defines the largest extent of the thread between two interruptions of the thread, particularly an extent between two opposite interruptions. Particularly, in the case of exactly two interruptions, the thickness defines the extent between the two interruptions. The thickness extends perpendicular to the longitudinal extension direction. Due to the at least one interruption of the thread, the thickness of the thread of the screw portion is smaller than its lateral diameter.

In certain embodiments, the nut element comprises or consists of at least one metal or alloy. In certain embodiments the nut element and the fastening element comprise or consist of the same material, preferably a metal or alloy.

For example, nut element is a commercially available M1.4 cap nut made of coated brass.

In certain embodiments, the fastening element consists or comprises of a different material than the nut element, wherein every portion comprised in the fastening element comprises a higher stiffness than the nut element.

In certain embodiments, at least the thread of the fastening element comprises a higher stiffness than at least the internal thread of the nut element.

In certain embodiments the screw portion of the fastening element comprises or consists of a different material than the rest of the fastening element, wherein the screw portion comprising a thread has a higher stiffness than the nut element comprising the internal thread. In certain embodiments, the stiffness of the screw portion of the fastening element is greater than the stiffness of the nut element.

In certain embodiments, the stiffness of either the fastening element or the nut element is greater than the other one, such that frictional engagement of said elements is increased.

The difference in stiffness of at least the thread compared to the internal thread, combined with the above-mentioned interruptions delimited by angular edges ensure that a secure engagement between fastening element and nut element is provided by frictional engagement of the threads, not only exerting preload force but also by introducing a wedge effect, thereby securing components of a spectacle lens in place with greater effect, particularly with increased durability and stability and decreased clearance between the components to be fastened.

A third aspect of the invention relates to a first spectacle portion, comprising
- a fastening assembly according to the second aspect of the invention;
- at least a section of a temple, and
- a spectacle lens, particularly a frameless spectacle lens,
wherein, the temple comprises a first opening corresponding to the screw portion of the fastening element and a second opening corresponding to the locking portion, and wherein the spectacle lens comprises in a first edge portion of the lens a first opening corresponding to the screw portion of the fastening element and a second opening or a blind hole corresponding to the locking portion of the fastening element, such that the screw portion can be arranged through the first openings of the temple and the spectacle lens and that the locking portion can be arranged through the second opening of the temple and at least into, particularly through the second opening or the blind hole of the spectacle lens, whereby the fastening assembly is configured to fasten the spectacle lens to the temple by screwing the nut onto the screw element protruding through the first openings of the spectacle lens and the temple with the locking portion locked in the second opening of the temple and in the second opening or in the blind hole of the spectacle lens.

In an embodiment, the section of the temple is or comprises a side piece.

A fourth aspect of the invention relates to a second spectacle portion, comprising
- a fastening assembly according to the second aspect of the invention;
- at least a section of a bridge, and
- a spectacle lens, particularly a frameless spectacle lens,
wherein, the bridge comprises a first opening corresponding to the screw portion of the fastening element and a second opening corresponding to the locking portion, and wherein the spectacle lens comprises in a second edge portion of the lens opposite to said first edge portion a first opening corresponding to the screw portion of the fastening element and a second opening or a blind hole corresponding to the locking portion of the fastening element, such that the screw portion can be arranged through the first openings of the bridge and the spectacle lens and that the locking portion can be arranged through the second opening of the bridge and at least into, particularly through the second opening or the blind hole of the spectacle lens, whereby the fastening assembly is configured to fasten the spectacle lens to the bridge by screwing the nut onto the screw element protruding through the first openings of the spectacle lens and the bridge with the locking portion locked in the second opening of the bridge and in the second opening or in the blind hole of the spectacle lens.

In certain embodiments of the third and fourth aspect of the invention, at least one of the first and second edge portions comprise multiple first openings and/or second openings corresponding to the number of the respective screw portions and/or locking portions of a fastening assembly according to the second aspect of the invention, respectively. This feature e.g. is necessary if a lens is large in size and requires multiple points of fastening. Aesthetic reasons are also imaginable. In an alternative embodiment, a spectacle lens may comprise multiple first and/or second spectacle portions, wherein in each spectacle portion comprises a dedicated fastening assembly assigned thereto, fastening at least two components of a spectacle.

A fifth aspect of the invention relates to a spectacle, comprising
- two temples,
- two spectacle lenses,
- a bridge and
- four fastening assemblies according to the second aspect of the invention, wherein each spectacle lens is fastened to a corresponding temple via a fastening assembly, forming two first spectacle portions according to the third aspect of the invention and wherein each spectacle lens is additionally fastened via a fastening assembly to a common bridge connecting the spectacle lenses, forming two second spectacle portions according to the fourth aspect of the invention.

Particularly, the bridge may further comprise or be connected to nose pads for centering the spectacle on a nose of a person wearing the spectacle. In one embodiment, the spectacle lens comprises a bifocal lens.

Exemplary embodiments are described below in conjunction with the figures. The figures are appended to the claims and are accompanied by text explaining individual features of the shown embodiments and aspects of the present invention. Each individual feature shown in the figures and/or mentioned in the text of the figures may be incorporated (also in an isolated fashion) into an independent claim according to the present invention and is not to be viewed as limiting the scope of the invention provided by the subject matter of the independent claims.

### Description of the figures

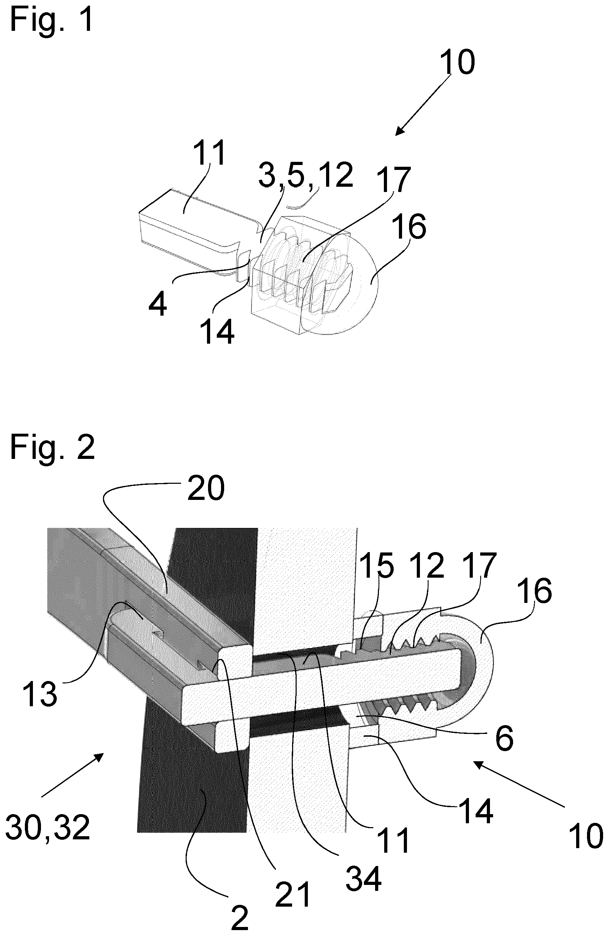

Fig. 1 shows a first exemplary embodiment of a fastening assembly 10 in perspective view. In this embodiment the fastening assembly 10 comprises a fastening element 11 and a nut element 16. The screw portion 12 comprises two interruptions 3 on opposite sites delimited by two angular edges 4, respectively. Herein, the interruptions 3 are formed by surfaces 5, forming essentially planar surfaces. In a circumferential direction around the screw portion 12, the screw portion 12 comprises a thread 15, wherein the thread 15 is interrupted by said two interruptions 3. The thread 15 of the screw portion 12 is formed by a plurality of teeth 36 arranged in an alternating manner along the screw portion 12, realizing a slope of the thread 15, such that a nut element 16 can be screwed onto the screw portion 12 via its internal thread 17, as indicated in Fig. 1. Each of the teeth 36 is arranged perpendicular to the longitudinal extension direction of the screw portion 12, i.e. they are not inclined, as it is the case for conventional screws. In other words, if the interruptions 3 of the thread 15 were closed, no corkscrew-like shape would be obtained, but the thread 15 would consist of multiple disc-like elements arranged in series. From the fabrication point of view, the thread 15 according to the invention is advantageous in that the thread 15 may be formed for example by a two-dimensional process instead of a three-dimensional process necessary to create conventional screw shapes. For example, the thread 15 of the screw portion 12 may be fabricated by a laser cutting process. From the structural point of view, the teeth 36 and the angular edges 4 form sharp contact structures for a secure friction fit between the fastening element 10 and the nut element 16.

In the embodiment in Fig. 1, the internal thread 17 of the nut element 16 comprises a cylindrical cross-section, while the thread 15 of the screw portion 12 comprises a quadrupolar cross-section. The internal thread 17 of the nut element 16 and the thread 15 of the screw portion 12 correspond to each other in that the four angular edges 4 cause a secure frictionally engaged connection between the angular edges 4 of the thread 15 of the screw portion and the internal thread 17 of the nut element 16, as the nut element 16 is screwed onto the screw portion 12. The stiffness of the thread 15 of the fastening element 11 can differ to the stiffness of the internal thread 17 of the nut element 16 such that the screw portion 12 not only frictionally engages with the nut element 16 by preload force but also a wedge effect exerted such that the frictional engagement is increased and loosening of fastening element 11 and nut element 16 is avoided. Preferably, the fastening element 10 comprises a harder material than the nut element 16, making the fastening element 10 a sustainable and endurant structure, while the nut element 16 may be replaced on demand, for example in case of wear.

In an alternative exemplary embodiment, however not shown here, a fastening element may comprise more than two interruptions per screw portion of the fastening element, wherein each interruption is also delimited by two angular edges and wherein said interruption spans a surface, e.g. but not limited thereto, a planar surface. This would increase the number of angular edges to six compared to the four angular edges in the figure shown here, therefor further increasing the wedge effect. Other real value integer realizations of interruptions are imaginable as well.

Fig. 2 shows a second exemplary embodiment of a fastening assembly 10 and a first edge portion 32 of a spectacle portion in partially cross-sectional perspective view. A fastening element 11 of the fastening assembly 10 herein comprises a screw portion 12 extending parallelly to a locking portion 13, wherein the screw portion 12 protrudes a first opening 21 of a temple 20, wherein the first opening 21 is herein shown as a cut through representation. Further, the screw portion 12 protrudes through the first opening 34 of the first edge portion 32 of the first spectacle portion 30. Adjacent thereafter, the screw portion 12 protrudes through a central opening 6 of a disc element 14, wherein the disc element 14 is an optional element of the fastening assembly 10, and wherein the disc element 14 can be of the same material or a different material than the screw portion 12, depending on required properties for secure fastening. Circumferentially extending the inner face of the nut element 16 is an internal thread 17 that frictionally engages with the thread 15 arranged in circumferential direction of the screw portion 12, as already shown in Fig. 1. In this embodiment of a fastening assembly 10, the locking portion 13 is not separable from the fastening element 11, thereby forming a U-shape of the fastening element 11. Furthermore, the locking portion 13 protrudes through a second opening 22 of the temple 20, wherein said opening 22 form-fittingly corresponds to the locking portion 13. Subsequently thereafter, the locking portion 13 penetrates the second opening 35 of the first edge portion 32 of the first spectacle portion 30 (not shown), wherein the second opening 35 may be formed as a blind hole.

Other exemplary embodiments are also imaginable, although not shown here for the sake of conciseness, in which a first edge portion of a first spectacle portion comprises more than one first and/or second opening, and wherein the number of screw portions corresponds to the number of first openings and the number locking portions corresponds to the number of second openings, thereby further reducing clearance and increasing durability and stability. In this case the number of nut elements also corresponds to the number of screw portions.

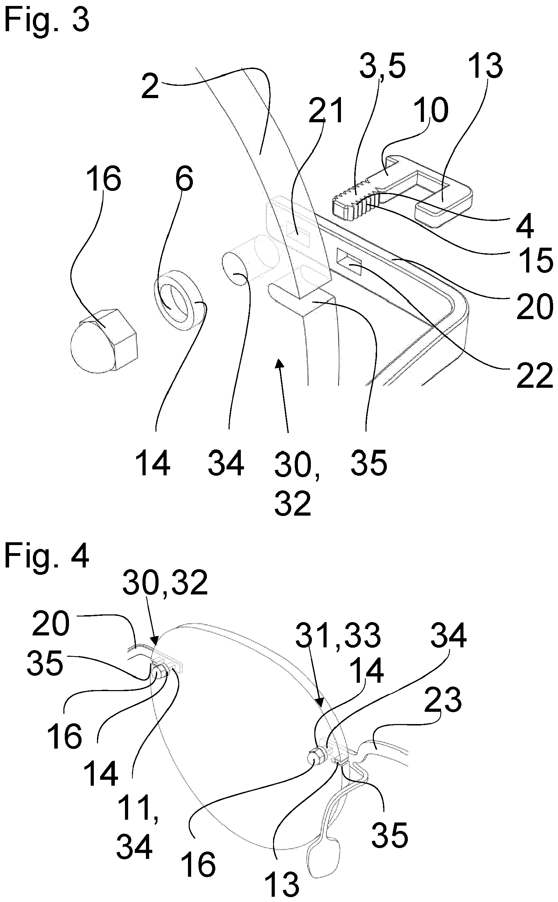

Fig. 3 shows the same elements as already presented in the exemplary embodiment of Fig. 2 in an explosion view. Assembly of the first spectacle portion 30 in this exemplary embodiment follows suit by positioning the first and second opening 21,22 of the temple 20 such that the first and second opening 21,22 of the temple 20 are congruent with the first and second opening 34,35 of the fist edge portion 32 of the first spectacle portion 30 of the spectacle lens 2. Subsequently, the screw portion 12 of the fastening element 11 and the locking portion 13 of the fastening element 11 are pushed through the first and second opening 35 of said first edge portion 32 respectively. Finally, the disc element 14 is arranged around the screw portion 12 of the fastening element 11 and the nut element 16 is screwed onto the screw portion 12, thereby frictionally engaging the screw portion 12 with the nut element 16 securing the spectacle lens 2 to the temple 20 with a tight and durable fit by exerting preload force and wedge effect. The disc element 14 thereby can be manufactured from a softer material than the other components to reduces the pressure exerted from the nut element 16 on the spectacle lens 2.

Fig. 4 shows an assembled exemplary embodiment of a first spectacle portion 30 and a second spectacle portion 31 in a perspective view. The left side of the spectacle lens 2 accommodates a first opening 34 and a second opening 35 of the spectacle lens 2, together making up the first edge portion 32 of the first spectacle portion 30, wherein the fastening assembly 10 secures the temple 20 to the spectacle lens 2 as described in figures 1-3. On the right side of the spectacle lens 2, a second spectacle portion 31, comprising a second edge portion 33 is shown. Here, the second edge portion 33 comprises a first and second opening 34,35 opposite to the first and second opening 34,35 of the first edge portion 32. Of note is, that arrangement of the second edge portion 33 is not limited to the opposite of the first edge portion 32. Additionally shown, is a part of a bridge 23, which similarly to the temple 20, comprises a first opening 24 corresponding to a screw portion 12 of a fastening element 11 and a second opening 25 corresponding to the locking portion 13 of the fastening element 11. In this exemplary embodiment the screw portion 12 protrudes the first opening 24 of the bridge 23 and subsequently protrudes the first opening 34 of the second edge portion 33 of the spectacle lens 2. Additionally, the locking portion 13 of the fastening element 11 protrudes the second opening 25 of the bridge 23 and subsequently fits into the second opening of the second edge portion 33 of the second spectacle portion 31, thereby reducing the clearance of the bridge 23 with respect to the spectacle lens 2. The second opening 35 of the second edge portion 33 of a spectacle lens 2 can be formed as a blind hole.

Again, however not shown in this exemplary embodiment for the sake of brevity, additional first and second openings ca be comprised in either the first and/or second spectacle portion, respectively. If these are present, the number of screw portions corresponds to the number of first openings of the first and/or second edge portions. Additionally, the number of first openings of the temple and/or bridge corresponds to the number of first openings of the first and/or second edge portion respectively.

Also imaginable are multiple locking portions of a fastening element, wherein in this case the number of second openings of the first and/or second edge portions would correspond to the number of locking portions comprised in a respective fastening element. Furthermore, the second openings of a temple and/or bridge in this case correspond to the number of locking portions.

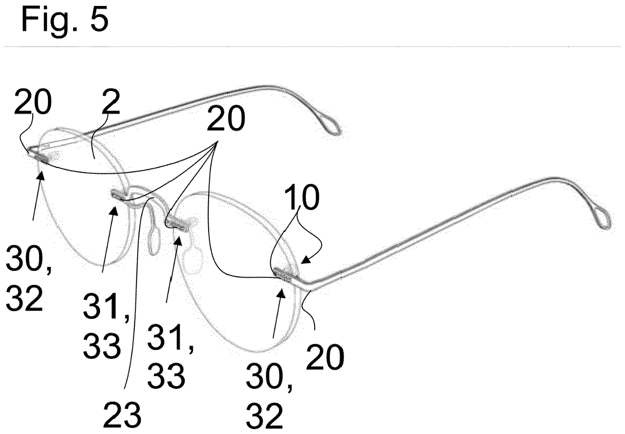

Fig. 5 shows a spectacle 1, comprising two spectacle lenses 2. Each spectacle lens 2 comprises a first edge portion 32 and a second edge portion 33, herein arranged on opposite sides of the spectacle lens 2. As described in figures 1-4, a temple 20 is fastened to the lens by means of a fastening assembly 10, wherein the fastening assembly 10 is comprised by at least one fastening element 11 and one nut element 16. The temple 20 of each spectacle lens 2 is fastened by means of a fastening assembly 10 at the respective first edge portion 32 of the respective spectacle lens 2. Additionally in this exemplary embodiment of a spectacle, the spectacle comprises a bridge 23, which generally comprises two first openings 24 and two second openings 25, respectively, arranged on opposite ends of the bridge 23 and which are fastened to the first and second opening 34,35 of the respective spectacle lens 2 by means of a respective fastening assembly 10.

However other arrangements are imaginable, e.g., a spectacle can comprise two bridges arranged on top of each other, wherein each of the two bridges is fastened by a respective fastening assembly to a respective second edge portion of a second spectacle portion of a spectacle lens. This would further increase durability and stability and further decrease clearance between the spectacle lens and bridge of a spectacle and provides a plurality of aesthetic design realizations.

**List of reference signs**

| | |
|---|---|
| Spectacle | 1 |
| Spectacle lens | 2 |
| Interruption | 3 |
| Angular edges | 4 |
| Surface | 5 |
| Central opening | 6 |
| Fastening assembly | 10 |
| Fastening element | 11 |
| Screw portion | 12 |
| Locking portion | 13 |
| Disc element | 14 |
| Thread | 15 |
| Nut element | 16 |
| Internal thread | 17 |
| Temple | 20 |
| First opening of the temple | 21 |
| Second opening of the temple | 22 |
| Bridge | 23 |
| First opening of the nose clip | 24 |
| Second opening of the nose clip | 25 |
| First spectacle portion | 30 |
| Second spectacle portion | 31 |
| First edge portion | 32 |
| Second edge portion | 33 |
| First opening of the spectacle lens | 34 |
| Second opening of the spectacle lens | 35 |
| Tooth | 36 |

## Claims

1. A fastening element (11), in particular for fastening components of a spectacle (1) to each other, wherein the fastening element (11) comprises a screw portion (12) with a thread (15) extending along the screw portion (12), **characterized in that** the thread (15) is interrupted at least once in a circumferential direction around the screw portion (12).

2. The fastening element (11) according to claim 1, wherein the thread (15) is interrupted by at least one surface (5) extending between two angular edges (4) delimiting an interruption (3) of the thread (15).

3. The fastening element (11) according to claim 2, wherein the surface (5) is a planar surface.

4. The fastening element (11) according to claim 3, wherein the thread (15) comprises exactly two interruptions (3) with two planar surfaces arranged on two opposite sides of the screw portion (12).

5. The fastening element (11) according to one of the preceding claims, wherein the thread (15) comprises an essentially polygonal cross-section.

6. The fastening element (11) according to claim 5, wherein the thread (15) comprises an essentially quadrangular cross-section, particularly an essentially rectangular or squared cross-section.

7. The fastening element (11) according to one of the claims 5 or 6, wherein the corners of the polygon or the quadrangle are rounded off.

8. The fastening element (11) according to one of the preceding claims, further comprising a locking portion (13) extending parallel to the screw portion (12), wherein the locking portion (13) and the screw portion (12) are connected such that the fastening element (11) at least in sections forms a U-shape.

9. A fastening assembly (10), in particular for fastening components of a spectacle, the fastening assembly (10) comprising:
- a fastening element (11) according to one of the preceding claims and
- a nut element (16),
wherein the nut element (16) comprises an internal thread (17) corresponding to the thread (15) of the fastening element (11), such that the nut element (16) can be screwed onto the screw portion (12) of the fastening element (11) in a frictionally engaged connection.

10. The fastening assembly (10) according to claim 9, further comprising a disc element (14) with a central opening corresponding to the screw portion (12), such that the disc element (14) is arrangeable around the screw portion (12) of the fastening element (11).

11. The fastening assembly (10) according to claim 10, wherein the internal thread (17) of the nut element (16) is shaped cylindrically.

12. The fastening assembly (10) according to claim 10 or 11, wherein at least the thread (15) of the fastening element (11) comprises a higher stiffness than at least the internal thread (17) of the nut element (16).

13. A first spectacle portion (30) comprising:
- a fastening assembly (10) according to one of the claims 9 to 12;
- at least a section of a temple (20) and
- a spectacle lens (2), particularly a frameless spectacle lens (2),
wherein the temple (20) comprises a first opening (21) corresponding to the screw portion (12) of the fastening element (11) and a second opening (22) corresponding to the locking portion (13), and
wherein the spectacle lens (2) comprises in a first edge portion (32) of the lens a first opening (34)corresponding to the screw portion (12) of the fastening element (11) and a second opening or a blind hole corresponding to the locking portion (13) of the fastening element (11), such that the screw portion (12) can be arranged through the first openings (21) of the temple (20) and the spectacle lens (2) and that the locking portion (13) can be arranged through the second opening (22) of the temple (20) and at least into, particularly through the second opening or the blind hole of the spectacle lens (2), whereby the fastening assembly (10) is configured to fasten the spectacle lens (2) to the temple (20) by screwing the nut onto the screw element protruding through the first openings of the spectacle lens (2) and the temple (20) with the locking portion (13) locked in the second opening (22) of the temple (20) and in the second opening or in the blind hole of the spectacle lens (2).

14. A second spectacle portion (31) comprising:
- a fastening assembly (10) according to one of the claims 9 to 12;
- at least a section of a bridge (23) and
- a spectacle lens (2), particularly a frameless spectacle lens (2),
wherein the bridge (23) comprises a first opening (24) corresponding to the screw portion (12) of the fastening element (11) and a second opening (25) corresponding to the locking portion (13), and
wherein the spectacle lens (2) comprises in a second edge portion (33) of the lens opposite to said first edge portion (32) a first opening (34) corresponding to the screw portion (12) of the fastening element (11) and a second opening or a blind hole corresponding to the locking portion (13) of the fastening element (11), such that the screw portion (12) can be arranged through the first openings of the bridge (23) and the spectacle lens (2) and that the locking portion (13) can be arranged through the second opening (25) of the bridge (23) and at least into, particularly through the second opening or the blind hole of the spectacle lens (2), whereby the fastening assembly (10) is configured to fasten the spectacle lens (2) to the bridge (23) by screwing the nut onto the screw element protruding through the first openings of the spectacle lens (2) and the bridge (23) with the locking portion (13) locked in the second opening (25) of the bridge (23) and in the second opening or in the blind hole of the spectacle lens (2).

15. A spectacle (1) comprising:
- two temples (20),
- two spectacle lenses (2),
- a nose clip (23) and
- four fastening assemblies according to one of the claims 9 to 12,
wherein each spectacle lens (2) is fastened to a corresponding temple (20) via a fastening assembly (10), forming two first spectacle portions (30) according to claim 13 and wherein each spectacle lens (2) is additionally fastened via a fastening assembly (10) to a common bridge (23) connecting the spectacle lenses (2), forming two second spectacle portions (31) according to claim 14.
